# EUROPEAN PATENT APPLICATION

(11) **EP 4 187 698 A1**
(43) Date of publication of application: **31.05.2023**
(21) Application number: 21210640.5
(22) Date of filing: 26.11.2021
(51) Int. Cl.: H01M 50/209, H01M 10/6557, H01M 10/6567, H01M 10/613, H01M 10/625

(54) **COOLING SYSTEM FOR SINGLE AND MULTI-BAY EV STRUCTURAL BATTERIES**

(71) Applicant: Volvo Car Corporation, 40531 Göteborg (SE)
(72) Inventor: Karlsson, Daniel, 412 65 Göteborg (SE); Hjälm Wallborg, Martin, 442 74 Harestad (SE); Persson, Klas, 442 35 Kungälv (SE)
(74) Representative: Maiwald GmbH

(57) **Abstract**

In a battery pack (4) for use in an electric vehicle at least two longitudinal rows (16, 17, 18, 19) of prismatic battery cells (63, 64, 65) extend side-by side in the length direction (L). t The cells are packed in an array (13, 14) comprising transverse rows (25, 26, 27, 28). The array (13, 14) has longitudinal sides (33, 34), plate-shaped cooling members (21, 22, 23) being interposed between adjacent cells (63, 64, 65) in the longitudinal rows (16, 17, 18, 19) and extending in the width direction (W) from an upstream longitudinal side (33) to the opposite longitudinal side (34) of the array (13, 14). Each plate-shaped cooling member (21, 22, 23) is connected with an inlet to a coolant distribution duct (30) and with an outlet to a coolant outflow duct (30'). The distribution duct (30) and the outflow duct (30') extend parallel to sill members (6, 7). The distribution duct (30) is connected to a supply duct (31) and the outflow duct (30') is connected to a return duct (31'), the supply duct (30) and the return duct (31') extending through the front piece (8) and/or the transverse member (9, 15).

## Description

### Technical Field

The present disclosure relates to a battery pack for use in an electric vehicle comprising a transverse front piece and a transverse member that each extend in a width direction and that are interconnected by two spaced-apart sill members extending in a length direction, at least two longitudinal rows of prismatic battery cells extending side-by side in the length direction.

The present disclosure also relates to a cooling member for use in such a battery back and to a method of manufacturing.

### Background Art

Battery Electric Vehicles (BEV) and their power trains are commonly powered by an array of electrical cells, connected either in series, parallel or a combination of both in order to reach a desired system output voltage window that is optimal for motor and drive train efficiency. Battery cells come in different formats such cylindrical or prismatic or pouch-shaped and generate heat due to internal resistance when power is drawn (acceleration) and applied (charging). Heat generated is actively removed to prevent cell temperature from exceeding a set threshold value at which break down of the cell electrolyte occurs, causing permanent damage and effectively lowering the cell lifespan.

It follows that one important design parameter for electric vehicle battery packs is to keep absolute temperature below a certain limit to ensure sufficient cell lifespan and product safety. However, depending on the cell internals and manufacturing methods used - wound or stacked jellyroll - heat is not distributed equally in all cell directions, effectively creating a temperature gradient with hotter and colder areas. It is desirable to reduce the temperature gradient as much as possible and reach a very even temperature distribution throughout the cell where the difference between hot and cold spots is reduced.

In order to protect the cell electrolyte in a battery cell from breaking down, power input and power output are limited (throttled back) when cell temperature exceeds a set value, usually coinciding with a cell hot spot forming. Hence, if one area of the cell is overheating, control hardware and software will initiate a throttling down protocol in order to protect the electrolyte. In practice, this issue is most frequently experienced by customers when fast-charging at high power and current. A regular fast-charging stop has a duration of 10-30min, depending on the specific vehicle and the power rating of the charging station. The long charging times during power input contrast with power output from the cells during on-ramp acceleration or an overtaking situation, that are relatively short duration events, often less than a minute, but sometimes repeated a few times within a shorter time interval.

To deliver an improved fast-charging experience (lower charging time), battery packs will have to feature cells with optimized internals to avoid hot spot development and powerful cooling systems.

A battery pack is known having cylindrical battery cells, that are cooled by meandering cooling plates, extending in the length direction and connected in series. The known cooling plates result in uneven cooling along the length of the plates and may lead to local hot spots.

It is an object of the present disclosure to provide a battery pack with an effective cooling system having a substantially homogenous temperature distribution when power is supplied by the battery cells and when the cells are being charged. It is another object to provide an electric vehicle having a structural battery that is of relatively low weight and that can be charged in a relatively fast-charging cycle.

### Summary

A battery pack is provided for use in an electric vehicle comprising a transverse front piece and a transverse member that each extend in a width direction and that are interconnected by two spaced-apart sill members extending in a length direction, at least two longitudinal rows of prismatic battery cells extending side-by side in the length direction, the cells being packed in an array comprising transverse rows, the array having longitudinal sides, plate-shaped cooling members being interposed between adjacent cells in the longitudinal rows and extending in the width direction from a first longitudinal side to a second longitudinal side of the array, each plate-shaped cooling member connected with an inlet to a coolant distribution duct and with an outlet to a coolant outflow duct, the distribution duct and the outflow duct extending parallel to the sill members, the distribution duct connected to a coolant supply duct and the outflow duct connected to a return duct, the coolant supply duct and the return duct extending through the front piece and/or the transverse member.

The parallel supply of the coolant to the plate shaped cooling members according to the present development results in effective cooling, allowing the maximum temperature of the battery pack to be lowered. In this way the maximum temperature can be monitored and kept below a temperature threshold value and degradation of the electrolyte of the battery cells can be reduced. The parallel coolant distribution also results in improved uniformity of cooling, avoiding local hot spots and allowing faster charging rates at relatively high power input (ampere) for a longer period of time before the need for throttling back due to local hot spots in one or more cells.

The low temperature differences on cell level increase the cell lifespan. The cells in the battery pack according to the present development experience less degradation (slower ageing) by the internal temperatures being kept at a more uniform level, allowing the electrochemical reactions to progress and run in an equally uniform fashion.

A cooling member may be provided between each pair of adjacent transverse rows of cells.

Each cell in the battery pack is cooled along at least one side surface for optimal cooling and avoiding local hot spots.

The front piece and the transverse member may exert a compressive force of between 20 and 200 kN/m2 on the cells in the length direction.

The pre-compressed stack of cells and cooling plates between the front piece and transverse member results in a light-weight structural battery that can be effectively and uniformly cooled.

The inlet duct may be connected to the distribution duct at or near a midpoint of the distribution duct.

This results in a symmetric flow distribution along the cooling members and increases the uniformity of the cooling when seen in the length direction.

In a battery pack according to the disclosure, a cooling member may be provided between the transverse front piece and an adjacent transverse row of cells and between the transverse member and an adjacent transverse row of cells.

By cooling both long faces of the first and last transverse rows of cells, each cell abutting a transverse beam, overheating of said cells is prevented.

In a battery pack, a distance between the longitudinal sides of the array and the sill members in the width direction may be between 5 cm and 25 cm, the coolant inlet duct and the coolant return duct extending between the longitudinal sides of the array and the sill members.

The coolant supply ducts and the coolant return duct are integrated in a compact construction by being accommodated in the space between the sill members and the array of battery cells. This results in a battery pack of reduced height and creates a strong bond between the cooling channels and the cells, reinforcing the construction of a structural battery pack.

**The** transverse member of the battery pack may comprise a beam or a foot garage, a rear transverse piece interconnecting the rear parts of the sill members, a first array of the cells being situated between the front transverse member and the beam or foot garage, a second array of cells being situated between the beam or foot garage and the rear transverse piece, each array of cells being provided with respective cooling members, coolant inlet and distribution ducts and outflow and return ducts, the inlet and return ducts of the first array and the second array of cells extending through the front transverse piece and beam or foot garage.

The cells are accommodated in a front cell bay and a rear cell bay, each with their own cooling system. A transverse beam in the form of a foot garage will offer improved ergonomics in low vehicles. A transverse beam acting as a scaling member in the length direction (e.g. in the middle) of the pack reinforces the construction of a structural battery pack.

A battery pack may be provided in which each cooling member comprises two parallel plates with an end cap, having two lateral tube sections, interconnected to form the distribution duct.

The cooling members have a slim and compact design and provide a large heat exchanging surface with the side faces of the battery cells. The plate shaped cooling members can easily be manufactured by extrusion. The walls and cross-section of the cooling members will be balanced in thickness and surface area between the need for optimal cooling and the compressive force that needs to be exerted on the cells in the length direction when the cells age and swell. If the cooling members are too thin, they could collapse under pressure, leading to uncontrolled swelling and drastically reduced cell lifespan.

The lateral tubes sections of adjacent cooling members may be interconnected via a flexible tube member.

The lateral tubes on the cooling members form spigots, preferably made of aluminium. The facing spigots of adjacent cooling members are interconnected by a piece of flexible hose or tubing that is snapped into place to complete the connection and forming a continuous distribution channel for the cooling fluid.

A distribution cooling member may be provided in the battery pack with an end part having an attachment part extending substantially parallel to the plate members and a cover that is in liquid tight engagement with the attachment part for forming a receiving chamber, and a connector stub for connecting to the inlet duct.

A cooling member according to the disclosure may comprise two parallel plate members, two end caps substantially parallel to the plate members, in liquid tight connection with the plate members and joined in a liquid-tight manner along a perimeter, a tube section extending on each side of the end caps, transversely to a plane of the plate members and adapted to be connected to a neighboring tube section for forming a distribution duct with neighboring cooling members.

An end cap may comprise an attachment part extending substantially parallel to the plate members and a cover that is in liquid tight engagement with the attachment part for forming a receiving chamber, and a connector stub for connecting to the inlet duct.

A method of manufacturing a battery pack for an electric vehicle, comprises
- forming an array of at least two rows of prismatic battery cells extending side-by side in the length direction, the cells being arranged in transverse rows, the array having longitudinal sides, and plate-shaped cooling members, that are placed between adjacent cells and extending in the width direction from an upstream longitudinal side to the opposite longitudinal side of the array,
- clamping the compressed array between a transverse front piece (8) and a transverse member extending in a width direction,
- interconnecting the transverse front piece and the transverse member via two sill members extending along each longitudinal side, and
- connecting the cooling members to a coolant supply duct and a coolant return duct, that extend through the transverse front piece and/or the transverse member.

Prior to connection of the sill members, the cooling plates may be interconnected via flexible duct segments.

### Brief Description of the Drawings

Embodiments of a battery pack comprising cooling members according to the disclosure will, by way of non-limiting example, be described in detail with reference to the accompanying drawings. In the drawings:
- Fig. 1: shows an electric vehicle comprising a battery pack,
- Fig. 2: shows a perspective view of a battery pack comprising a cooling system,
- Fig. 3: shows a top view of the battery pack of figure 2,
- Fig. 4: shows a detailed view of the inlet duct of the cooling system of fig. 2
- Fig. 5: shows a detailed view of a distribution duct of the cooling system of figure 2,
- Fig. 6: shows a distribution member of the cooling system of figure 2,
- Fig. 7: shows the connection of the inlet duct to the distribution member,
- Fig. 8: shows the distribution member on an enlarged scale, and
- Fig. 9: shows a partial cross-section of the cooling system of figure 2.

### Detailed Description

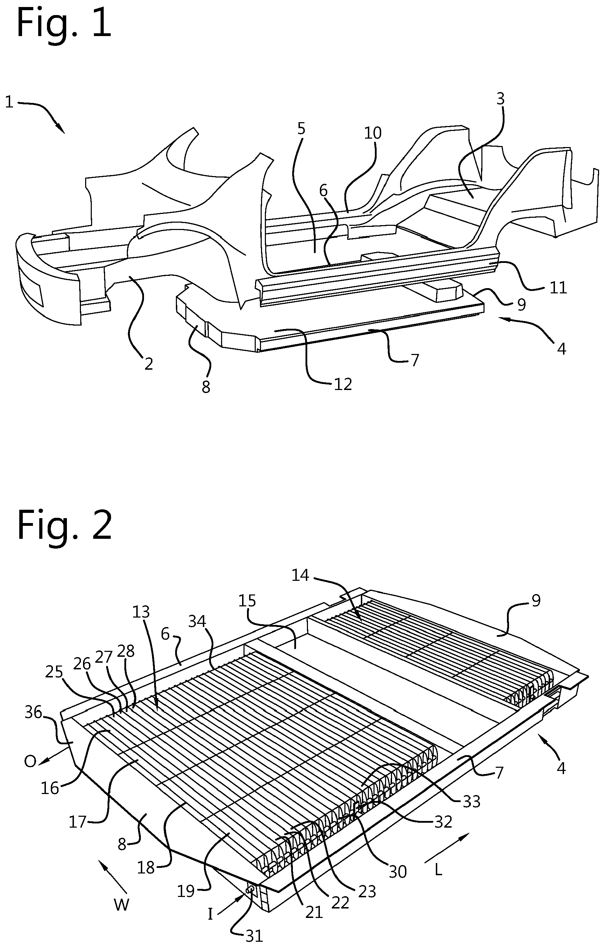

Figure 1 shows a frame 1 of an electric vehicle, comprising a front frame structure 2, a rear frame structure 3, including a rear floor, and a structural battery pack 4, forming a bottom structure 5 of the vehicle. The structural battery pack 4 comprises longitudinal sill profiles 6, 7 and transverse front and rear beams 8, 9. The sill profiles 6, 7 are connected to sill members 10, 11 of the frame and the transverse beams 8, 9 are connected to the front and rear frame structures 2, 3. A top plate 12 of the battery pack 4 forms the bottom of the cabin of the vehicle.

Figure 2 shows two arrays 12, 13 of prismatic battery cells that are arranged in rows 16, 17, 18, 19 extending in the length direction L. The battery cells in the front array 13 are compressed between the front beam 8 and a foot garage 15. The battery cells in the rear array 14 are compressed between the foot garage 15 and the rear beam 9.

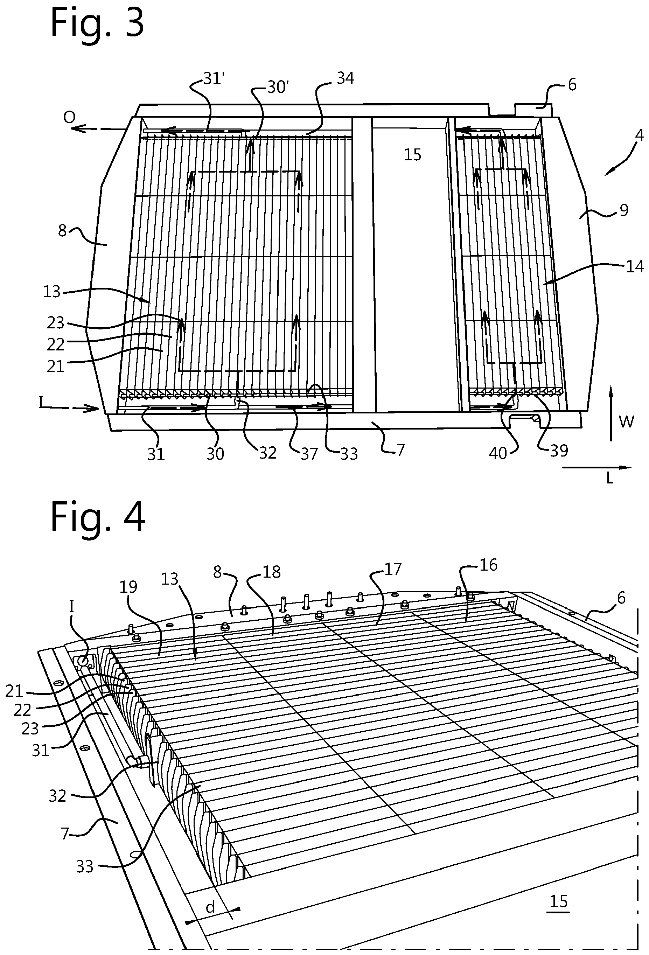

Cooling plates 21, 22, 23 extend in the width direction W along the transverse rows 25, 26, 27, 28 of the battery cells for cooling of the side surfaces of the cells. The cooling plates 21-23 are connected with their end parts to a fluid distribution duct 30 that receives cooling liquid via inlet duct 31, indicated at arrow I. In a similar manner, the outlets of the cooling plates 21-23 are connected to coolant outflow duct 30' and to a return duct 31', as shown in figure 3. The inlet duct 31, the fluid distribution duct 30 and the distribution member 32 are placed between the longitudinal sill member 7 and a longitudinal side 33 of the array of cells 13. At the opposite side, the fluid outflow duct 30' and the return duct 31'are situated between the sill profile 6 and longitudinal side 34 of the array 13. Heated coolant flows from the return duct 31' to an outlet 36, indicated at arrow O.

Figure 3 shows the inlet duct 31 being connected to the cooling plates 21-23 of the front array 13 of battery cells and continuing via inlet duct 37 that extends through the foot garage 15 to the distribution member 40 of a rear distribution duct 39. The rear distribution duct 39 supplies coolant to the cooling members of the rear array 14 of cells. As indicated by the arrows, cold coolant enters via inlet I into the cooling plates 21-23 at an upstream longitudinal side 33 of the arrays 13, 14 of battery cells and flows in the width direction W to the downstream longitudinal side 34. There the heated coolant is transported via outflow duct 30' and return duct 31'to coolant outlet O.

Figure 4 shows the inlet duct 31 extending from the inlet I in the space between the sill profile 7 and the longitudinal side 33 of the array 13of cells, to the distribution member 32. A distance d between the sill profile 7 and the longitudinal side 33 may be between 5 cm and 25 cm.

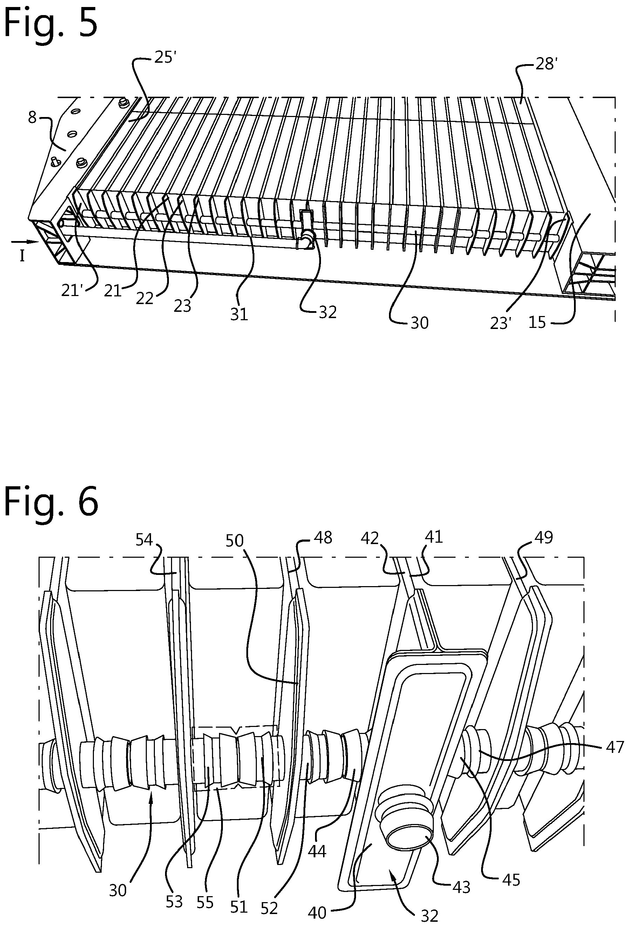

Figure 5 shows the inlet duct 31 and the distribution duct 30 that interconnects the cooling members 21, 22, 23.

Figure 6 shows a perspective view on an enlarged scale of the central distribution member 32, having a T- shaped end part 40. The end part 40 seals the end face of the cooling channel that is formed between the parallel cooling plates 41, 42. The end part 40 comprises a connector stub 43 for connecting to the inlet duct 31 and two side spigots 44, 45 for connecting to spigots 47, 52 of adjacent cooling members 48, 49 for forming the distribution duct 30.

For each cooling member 48, 49, 54 a cooling channel is enclosed between the parallel cooling plates of the cooling member. The cooling members are each at their end faces provided with an end cap 50 that seals the end face of the cooling channel and that is provided two side spigots 51, 52. The side spigots 51, 53 of adjacent cooling members 48, 54 are interconnected via a flexible tubular member 55, for instance a rubber hose, that is snapped in place upon completion the distribution duct 30.

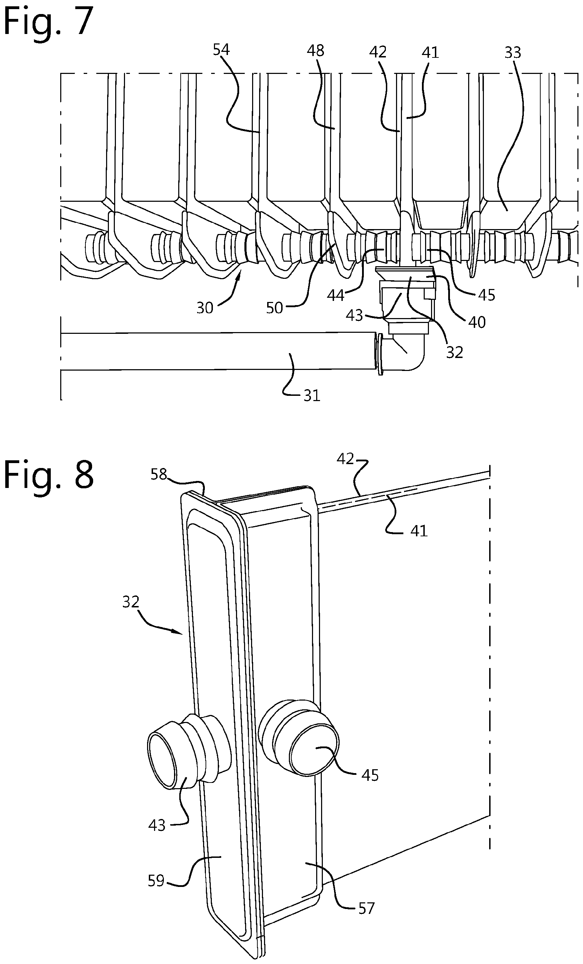

Figure 7 shows a top view of the inlet duct 31 connected to the connector stub 43 of the end part 40 of distribution member 32.

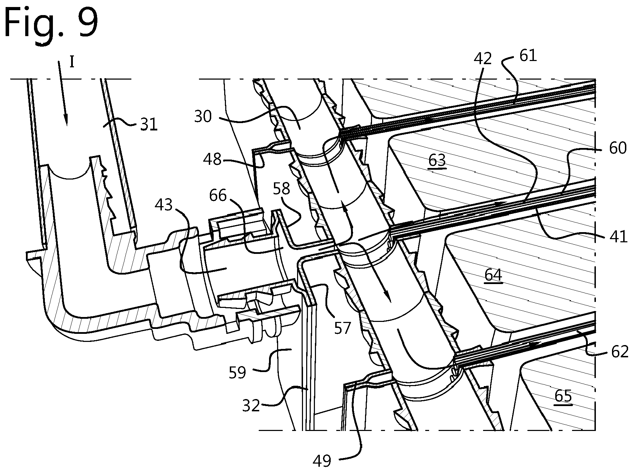

Figure 8 shows the distribution member 32 being formed of two t-shaped end flanges 57, 58 that each comprise a side spigot 45, and a transverse end cap 59 carrying the connector stub 43. The end cap 59 and flanges 57, 58 define a receiving chamber 66 for the coolant entering through the inlet duct, that is shown in figure 9. From the receiving chamber 66, the coolant is passed into the distribution duct 30 via the side spigots 45, and into the cooling channel that is defined between the cooling plates 41, 42. The cooling plates 41, 42, the T-shaped flanges and the end cap 59 may be formed of aluminium and can be interconnected by brazing, clinching or hemming.

Figure 9 shows parallel cooling channels 60, 61, 62 situated between adjacent transverse rows of cells 63, 64, 65. The coolant that is supplied by the inlet duct 31 is distributed from the receiving chamber 66 of the distribution member 32 in two opposite length directions into the distribution duct 30. The distribution member 32 is placed at the midpoint of the distribution duct, so that a uniform flow of coolant passes through all cooling members. From the distribution duct 30, the coolant enters into the cooling channels that are in heat exchanging contact with the side faces of the battery cells 63, 64, 65. The coolant passes to a downstream side of the transverse rows of cells 63-65 to be transported to an outlet via an outlet configuration that is similar in lay-out to the inlet configuration that is shown in figure 9.

## Claims

1. Battery pack (4) for use in an electric vehicle comprising a transverse front piece (8) and a transverse member (9, 15) that each extend in a width direction (W) and that are interconnected by two spaced-apart sill members (6, 7) extending in a length direction (L), at least two longitudinal rows (16, 17, 18, 19) of prismatic battery cells (63, 64, 65) extending side-by side in the length direction (L), the cells being packed in an array (13, 14) comprising transverse rows (25, 26, 27, 28), the array (13, 14) having longitudinal sides (33, 34), plate-shaped cooling members (21, 22, 23) being interposed between adjacent cells (63, 64, 65) in the longitudinal rows (16, 17, 18, 19) and extending in the width direction (W) from a first longitudinal side (33) to a second longitudinal side (34) of the array (13, 14), each plate-shaped cooling member (21, 22, 23) connected with an inlet to a coolant distribution duct (30) and with an outlet to a coolant outflow duct (30'), the distribution duct (30) and the outflow duct (30') extending parallel to the sill members (6, 7), the distribution duct (30) connected to a coolant supply duct (31) and the outflow duct (30') connected to a return duct (31'), the coolant supply duct (30) and the return duct (31') extending through the front piece (8) and/or the transverse member (9, 15).

2. Battery pack (4) according to claim 1, a cooling member (21, 22, 23) being provided between each pair of adjacent transverse rows of cells (25, 26, 27, 28).

3. Battery pack (4) according to claim 1 or 2, the front piece (8) and the transverse member (15) exerting a compressive force of between 20 and 200 kN/m2 on the cells in the length direction.

4. Battery pack (4) according to any of the preceding claims, the inlet duct (31) being connected to the distribution duct (30) at or near a midpoint of the distribution duct (30).

5. Battery pack (4) according to any of the preceding claims, a cooling member (21', 23') being provided between the transverse front piece (8) and an adjacent transverse row of cells (25') and between the transverse member (15) and an adjacent transverse row of cells (28').

6. Battery pack (4) according to any of the preceding claims, a distance (d) between the longitudinal sides (33, 34) of the array (13, 14) and the sill members (6, 7) in the width direction (W) being between 5 cm and 25 cm, the coolant inlet duct (31) and the coolant return duct (31') extending between the longitudinal sides (33, 34) of the array and the sill members (6, 7).

7. Battery pack (4) according to any of the preceding claims, the transverse member (15) comprising a beam or a foot garage, a rear transverse piece (9) interconnecting the rear parts of the sill members (6, 7), a first array (13) of the cells being situated between the front transverse member (8) and the beam or foot garage, a second array (14) of cells being situated between the beam or foot garage and the rear transverse piece (9), each array (13, 14) of cells being provided with respective cooling members (21, 22, 23), coolant inlet and distribution ducts (30, 31) and outflow and return ducts (30', 31'), the inlet and return ducts (31, 31') of the first array (13) and the second array (14) of cells extending through the front transverse piece (8) and beam or foot garage.

8. Battery pack (4) according to any of the preceding claims, in which each cooling member (21, 22, 23) comprises two parallel plates (41, 42) with an end cap (40, 50), having two lateral tube sections (44, 45;51, 52), interconnected to form the distribution duct (32).

9. Battery pack (4) according to claim 8, wherein the lateral tubes sections (51, 53) of adjacent cooling members (48, 54) are interconnected via a flexible tube member (55).

10. Battery pack (4) according to any of the preceding claims, a distribution cooling member (32) being provided with an end part having an attachment part (57, 58) extending substantially parallel to the plate members (41, 42) and a cover (59) that is in liquid tight engagement with the attachment part (57, 58) for forming a receiving chamber (66), and a connector stub (43) for connecting to the inlet duct (31).

11. Cooling member (48, 49, 54) comprising two parallel plate members (41, 42), two end caps (50) substantially parallel to the plate members (41, 42), in liquid tight connection with the plate members (41, 42) and joined in a liquid-tight manner along a perimeter, a tube section (51, 52) extending on each side of the end caps (50), transversely to a plane of the plate members (41, 42) and adapted to be connected to a neighboring tube section (44, 53) for forming a distribution duct (30) with neighboring cooling members.

12. Cooling member (48, 49, 54) comprising two parallel plate members (41, 42), two end caps (40), in liquid tight connection with the plate members, at least one end cap (40) having an attachment part (57, 58) extending substantially parallel to the plate members (41, 42), and a cover (59) that is in liquid tight engagement with the attachment part (57, 58) for forming a receiving chamber (66), and a connector stub (43) for connecting to the inlet duct (31).

13. Method of manufacturing a battery pack (4) for an electric vehicle, comprising:
- forming an array (13, 14) of at least two rows (16, 17, 18, 19) of prismatic battery cells (63, 64, 65) extending side-by side in the length direction (L), the cells being arranged in transverse rows (25, 26, 27, 28), the array (13, 14) having longitudinal sides (33, 34), and plate-shaped cooling members (21, 22, 23), that are placed between adjacent cells and extending in the width direction (W) from an upstream longitudinal side (33) to the opposite longitudinal side (34) of the array (13, 14),
- clamping the compressed array (13, 14) between a transverse front piece (8) and a transverse member (9, 15) extending in a width direction (W),
- interconnecting the transverse front piece (8) and the transverse member (9, 15) via two sill members (6, 7) extending along each longitudinal side (33, 34), and
- connecting the cooling members (21, 22, 23) to a coolant supply duct (31) and a coolant return duct (31'), that extend through the transverse front piece (8) and/or the transverse member (9, 15).

14. Method of manufacturing according to claim 13, wherein prior to connection of the sill members (6, 7), the cooling members (21, 22, 23) are interconnected via flexible duct segments (55).

## Amended claims

### Amended claims in accordance with Rule 137(2) EPC.

1. Battery pack (4) for use in an electric vehicle, comprising
a transverse front piece (8) and a transverse member (9, 15) that each extend in a width direction (W) and that are interconnected by two spaced-apart sill members (6, 7) extending in a length direction (L),
at least two longitudinal rows (16, 17, 18, 19) of prismatic battery cells (63, 64, 65), the prismatic battery cells (63, 64, 65) extending side-by side in the length direction (L), the cells being packed in an array (13, 14) comprising transverse rows (25, 26, 27, 28), the array (13, 14) having longitudinal sides (33, 34),
plate-shaped cooling members (21, 22, 23) being interposed between adjacent cells (63, 64, 65) in the longitudinal rows (16, 17, 18, 19) and extending in the width direction (W) along the transverse rows (25, 26, 27, 28) from a first longitudinal side (33) to a second longitudinal side (34) of the array (13, 14), each plate-shaped cooling member (21, 22, 23) connected with an inlet to a coolant distribution duct (30) and with an outlet to a coolant outflow duct (30'), the distribution duct (30) and the outflow duct (30') extending parallel to the sill members (6, 7), the distribution duct (30) connected to a coolant supply duct (31) and the outflow duct (30') connected to a return duct (31'), **characterized in that** the coolant supply duct (30) and the return duct (31') extend through the front piece (8) and/or the transverse member (9, 15).

2. Battery pack (4) according to claim 1, a cooling member (21, 22, 23) being provided between each pair of adjacent transverse rows of cells (25, 26, 27, 28).

3. Battery pack (4) according to claim 1 or 2, the front piece (8) and the transverse member (15) exerting a compressive force of between 20 and 200 kN/m2 on the cells in the length direction.

4. Battery pack (4) according to any of the preceding claims, the inlet duct (31) being connected to the distribution duct (30) at or near a midpoint of the distribution duct (30).

5. Battery pack (4) according to any of the preceding claims, a cooling member (21', 23') being provided between the transverse front piece (8) and an adjacent transverse row of cells (25') and between the transverse member (15) and an adjacent transverse row of cells (28').

6. Battery pack (4) according to any of the preceding claims, a distance (d) between the longitudinal sides (33, 34) of the array (13, 14) and the sill members (6, 7) in the width direction (W) being between 5 cm and 25 cm, the coolant inlet duct (31) and the coolant return duct (31') extending between the longitudinal sides (33, 34) of the array and the sill members (6, 7).

7. Battery pack (4) according to any of the preceding claims, the transverse member (15) comprising a beam or a foot garage, a rear transverse piece (9) interconnecting the rear parts of the sill members (6, 7), a first array (13) of the cells being situated between the front transverse member (8) and the beam or foot garage, a second array (14) of cells being situated between the beam or foot garage and the rear transverse piece (9), each array (13, 14) of cells being provided with respective cooling members (21, 22, 23), coolant inlet and distribution ducts (30, 31) and outflow and return ducts (30', 31'), the inlet and return ducts (31, 31') of the first array (13) and the second array (14) of cells extending through the front transverse piece (8) and beam or foot garage.

8. Battery pack (4) according to any of the preceding claims, in which each cooling member (21, 22, 23) comprises two parallel plates (41, 42) with an end cap (40, 50), having two lateral tube sections (44, 45;51, 52), interconnected to form the distribution duct (30).

9. Battery pack (4) according to claim 8, wherein the lateral tubes sections (51, 53) of adjacent cooling members (48, 54) are interconnected via a flexible tube member (55).

10. Battery pack (4) according to any of the preceding claims, a distribution cooling member (32) being provided with an end part having an attachment part (57, 58) extending substantially parallel to the plate members (41, 42) and a cover (59) that is in liquid tight engagement with the attachment part (57, 58) for forming a receiving chamber (66), and a connector stub (43) for connecting to the inlet duct (31).

11. Cooling member (48, 49, 54) for a battery pack (4) of any one of the preceding claims, the cooling member (48, 49, 54) comprising two parallel plate members (41, 42), two end caps (50) substantially parallel to the plate members (41, 42), in liquid tight connection with the plate members (41, 42) and joined in a liquid-tight manner along a perimeter, a tube section (51, 52) extending on each side of the end caps (50), transversely to a plane of the plate members (41, 42) and adapted to be connected to a neighboring tube section (44, 53) for forming a distribution duct (30) with neighboring cooling members.

12. Cooling member (48, 49, 54) for a battery pack (4) of any one of the preceding claims, the cooling member (48, 49, 54) comprising two parallel plate members (41, 42), two end caps (40), in liquid tight connection with the plate members, at least one end cap (40) having an attachment part (57, 58) extending substantially parallel to the plate members (41, 42), and a cover (59) that is in liquid tight engagement with the attachment part (57, 58) for forming a receiving chamber (66), and a connector stub (43) for connecting to the inlet duct (31).

13. Method of manufacturing a battery pack (4) for an electric vehicle, comprising:
- forming an array (13, 14) of at least two rows (16, 17, 18, 19) of prismatic battery cells (63, 64, 65) extending side-by side in the length direction (L), the cells being arranged in transverse rows (25, 26, 27, 28), the array (13, 14) having longitudinal sides (33, 34), and plate-shaped cooling members (21, 22, 23), that are placed between adjacent cells and extending in the width direction (W) from an upstream longitudinal side (33) to the opposite longitudinal side (34) of the array (13, 14),
- clamping the compressed array (13, 14) between a transverse front piece (8) and a transverse member (9, 15) extending in a width direction (W),
- interconnecting the transverse front piece (8) and the transverse member (9, 15) via two sill members (6, 7) extending along each longitudinal side (33, 34), and
- connecting the cooling members (21, 22, 23) to a coolant supply duct (31) and a coolant return duct (31'), that extend through the transverse front piece (8) and/or the transverse member (9, 15).

14. Method of manufacturing according to claim 13, wherein prior to connection of the sill members (6, 7), the cooling members (21, 22, 23) are interconnected via flexible tube members (55).
